Europäisches Patentamt

(19) European Patent Office

Office européen des brevets

(11) Numéro de publication: **0 005 683**
**B1**

(12) **FASCICULE DE BREVET EUROPEEN**

(45) Date de publication du fascicule du brevet: **21.04.82**

(51) Int. Cl.³: **G 02 B 5/172**

(21) Numéro de dépôt: **79810041.8**

(22) Date de dépôt: **23.05.79**

(54) **Procédé pour former sur au moins l'une des faces d'extrémités d'une fibre optique une microlentille plan-convexe accolée par sa face plane contre ladite face d'extrémité.**

(30) Priorité: **23.05.78 CH 5574/78**

(43) Date de publication de la demande:
**28.11.79 Bulletin 79/24**

(45) Mention de la délivrance du brevet:
**21.04.82 Bulletin 82/16**

(84) Etats contractants désignés:
**AT BE CH DE FR GB IT LU NL SE**

(56) Documents cités:
**DE - A - 2 546 861**
**DE - A - 2 625 097**

**ELECTRONICS LETTERS, Vol. 11, n° 20 octobre 1975 HITCHIN (GB) J. WITTMANN: "Contact Bonded Epoxy Resin Lenses to Fibre Endfaces" pages 477—478**
**OPTICAL AND QUANTUM ELECTRONICS, vol. 7, n° 4, juillet 1975 Londres (GB)**

(73) Titulaire: **BATTELLE MEMORIAL INSTITUTE**
**7 route de Drize**
**CH-1227 Carouge/Genève (CH)**

(72) Inventeur: **Gross, Daniel**
**40, route des Acacias**
**CH-1227 Carouge (CH)**

(74) Mandataire: **Dousse, Blasco et al,**
**7, route de Drize**
**CH-1227 Carouge/Genève (CH)**

(56) Documents cités:
**B. S. KAWASAKI et al.: "Bulb-ended fibre coupling to LED sources" pages 281—288 APPLIED OPTICS, vol. 14, n° 12, décembre 1975 New York (US)**
**W. W. BENSON et al: "Coupling efficiency between GA AL AS laser and low loss optical fibers" pages 2815—2816**

Courier Press, Leamington Spa, England.

# Procédé pour former sur au moins l'une des faces d'extrémités d'une fibre optique une microlentille plan-convexe accolée par sa face plane contre ladite face d'extrémité

La présente invention a pour objet un procédé pour former sur au moins l'une des faces d'extrémités d'une fibre optique une microlentille plan-convexe accolée par sa face plane contre ladite face d'extrémité.

L'utilisation des fibres optiques comme milieux de propagation de la lumière, qui apparaissait depuis longtemps comme une solution d'avenir pour de nombrouses applications (télécommunications, liaisons entre ordinateurs, etc...), connaît présentement un essor considérable, en raison notamment de l'apparition sur le marché de fibres à faible perte.

Il existe cependant encore à l'heure actuelle un certain nombre de problèmes qui s'opposent à la généralisation des fibres optiques, dont l'un des principaux est relatif à l'injection de lumière dans le coeur de ces fibres. Il est en effet bien connu que les fibres optiques à face d'extrémité plane présentent un angle d'acceptation de la lumière relativement étroit, de sorte que ces fibres ne peuvent généralement collecter qu'une faible fraction du faisceau lumineux que l'on cherche à y injecter, surtout lorsqu'on se trouve en présence de faisceaux émis par des sources de lumière fortement divergentes telles que les diodes laser (le coeur de la fibre ne pouvant en effet accepter que ceux des rayons du faisceau qui arrivent sous un angle inférieur ou égal à son angle d'acceptation). Cette limitation inhérente aux fibres optiques à face d'extrémité plane présente, en d'autres termes, l'inconvénient majeur de donner lieu à des rendements de couplage source-fibre relativement peu élevés.

On a déjà proposé un certain nombre de solutions pour tenter d'améliorer ce rendement de couplage, lesquelles sont essentiellement basées sur l'interposition d'éléments d'adaptation optique entre la source et la fibre. Une partie des solutions ainsi proposées consiste à utiliser des éléments optiques indépendants, placés à distance de la fibre et/ou de la source (par exemple utilisation d'une paire de macrolentilles cylindriques orthogonales, ou utilisation d'une fibre transverse en tant que microlentille cylindrique). L'utilisation d'éléments optiques indépendants présente cependant le grave inconvénient, en augmentant le nombre total des éléments constitutifs du système de couplage, d'accroître fortement les problèmes de montage et d'assemblage de ce système de couplage (et notamment les problèmes de positionnement et d'alignement rigoureux des différents éléments les uns par rapport aux autres). C'est la raison pour laquelle on tend plutôt à l'heure actuelle à s'orienter vers la conception d'éléments optiques intégrés à l'extrémité de la fibre, de façon à minimiser les problèmes d'assemblage. La conception de tels éléments intégrés n'en est pas moins sans sou-lever un certain nombre d'autres problèmes, qui se rapportent tant à leur fabrication et/ou à leur intégration proprement dite sur la fibre qu'à leurs performances optiques.

Pour réaliser de tels eléments intégrés, on a ainsi à titre d'exemple proposé d'accoler des microlentilles semi-cylindriques à l'extrémité des fibres. Une telle solution soulève cependant de sérieux problèmes quant à la fabrication de ces microlentilles semi-cylindriques ainsi que des problèmes quant à la fixation de ces microlentilles aux fibres. Pour tenter de remédier à ces inconvénients, on a alors proposé de produire directement des microlentilles aux extrémités des fibres, en utilisant des techniques de fusion telles que décrites, par exemple, dans la demande de brevet allemande No. 25 46 86. Les microlentilles ainsi produites en extrémité de fibre, bien que de fabrication facile, ne donnent cependant lieu qu'à des performances optiques relativement moyennes, en raison des faibles courbures susceptibles d'être ainsi obtenues (courbures dont le contrôle est par ailleurs fortement limité par les différences de températures de fusion entre le coeur et la gaine). Pour éviter le problème susmentionné, on a alors proposé d'enlever la gaine (cladding) de la fibre par attaque chimique avant de procéder à la fabrication de la microlentille sur l'extrémité du coeur ainsi dénudé. Cette solution est cependant loin d'être satisfaisante, étant donné que l'éventuelle augmentation du couplage qui en résulte risque d'être pratiquement entièrement annihilée par l'augmentation des pertes optiques inhérentes à l'enlèvement de la gaine.

On a enfin proposé de produire directement aux extrémités de fibres monomodes des microlentilles cylindriques ou hémisphériques de dimensions ultraréduites (rayon inférieur à 5 micromètres) faites en un matériau photoresist, en formant ces microlentilles au moyen de techniques microlithographiques. De telles microlentilles ne peuvent cependant donner lieu qu'à un faible accroissement du rendement de couplage, étant donné leur dimensions ultra-réduites qui se rapprochent dangereusement des longueurs d'onde des rayonnements lumineux à collimater (dimensions ultra-réduites susceptibles d'entraîner l'apparition de phénomènes de diffraction risquant de réduire à néant l'effet de collimation recherché). La formation de telles microlentilles ne saurait par ailleurs être étendue aux fibres multimodes, étant donné que les techniques qui rendent cette fabrication possible (injection de rayonnement UV à l'une des extrémités de la fibre en vue de provoquer la polymérisation du photoresist revêtant l'autre extrémité) restent exclusivement limitées aux fibres monomodes. Le matériau photoresist qui constitue ces microlentilles risque en outre vraisemblablement de poser des problèmes de stabilité chimique à long terme, ce qui risque de se traduire par une forte limitation de la durée de vie des systèmes de couplage équipés de telles microlentilles. Il est enfin fortement douteux que les techniques de fabrication mises en oeuvre pour fabriquer de telles microlentilles puissent permittre d'obtenir des surfaces de lentilles parfaitement satisfaisantes du point de vue optique. Par ailleurs, dans l'Electronics Letters *11*, 477—478 (1975), il est décrit une méthode suivant laquelle on trempe une fibre dans une résine epoxy liquide, on retire lentement cette fibre et on soumet la goutte restant à l'extrémité à un durcissement, traitement après lequel la lentille ainsi formée ne peut plus être remodelée.

La présente invention a précisément pour but de remédier au moins partiellement aux inconvénients susmentionnés, en proposant une structure de couplage pour fibre optique qui permet de réaliser le compromis le meilleur possible entre les performances optiques et la facilité de fabrication et/ou d'assemblage de cette structure.

A cet effet, la présente invention a pour objet un procédé pour former sur au moins l'une des faces d'extrémités d'une fibre optique une microlentille plan-convexe accolée par sa face plane contre ladite face d'extrémité, ladite microlentille étant destinée à permettre un accroissement du cône d'acceptation de la lumière susceptible d'être injectée dans cette fibre. Ladite fibre optique est une fibre multimode ayant un coeur présentant un diamètre d'au moins environ une dizaine de micromètres, et ladite microlentille est une lentille en forme de calotte sphérique contrée sur l'axe de la fibre, faite en un matériau thermoplastique transparent au rayonnement lumineux destiné à être véhiculé par la fibre, la face plane de ladite microlentille accolée contre ladite face d'extrémité présentant une extension au moins égale à la section transversale du coeur de la fibre.

Dans la présente description, l'expression "matériau thermoplastique transparent" qui caractérise le matériau constitutif de la microlentille située à l'extrémité de la fibre entend désigner tous les types de matériaux transparents aux rayonnements lumineux destinés à être véhiculés dans la fibre (que ce rayonnement soit situé dans la partie visible du spectre, et/ou dans la partie infrarouge ou ultraviolette du spectre) qui ont la propriété de se ramollir sous l'action de la chaleur et de se durcir en se refroidissant. Cette expression entend donc ainsi englober aussi bien des matériaux transparents organiques tels que certaines matières plastiques, que des matériaux transparents inorganiques tels que les différentes catégories de verre.

Dans la présente description également, le terme générique "fibre optique" entend englober tous les types de fibres optiques qui permettent d'assurer un confinement de l'énergie lumineuse dans le coeur de la fibre, et notamment aussi bien les fibres dites à "saut d'indice" que les fibres dites à "profil variable d'indice". Le terme plus spécifique "fibre optique multimode" entend quant à lui désigner l'une des deux classes bien connues de fibres telles qui sus-définies, pour lesquelles le diamètre du coeur est relativement grand (typiquement au moins égal à environ 10 micromètres) devant la longueur d'onde du rayonnement lumineux véhiculé par la fibre (l'autre classe étant celle des fibres "monomodes", pour lesquelles le diamètre du coeur est de l'ordre de grandeur de la longueur d'onde, à savoir typiquement seulement quelques microns).

On voit ainsi, dans la structure qui vient d'être définie, que la disposition d'une lentille en forme de calotte sphérique à l'extrémité d'une fibre multimode a essentiellement pour but de permettre un accroissement du cône d'acceptation de la lumière destinée à être injectée dans cette fibre multimode. Une telle structure peut donc être notamment utilisée pour réaliser l'injection dans la fibre de la lumière émise par des sources fortement divergentes telles que par exemple les diodes laser, la lentille en forme de calotte sphérique constitutive de cette structure permettant en effet d'opérer la transformation du faisceau fortement divergent émis par de telles sources en un faisceau suffisamment collimaté pour être, au moins dans sa majeure partie, accepté par le coeur de la fibre.

La structure sus-définie est également susceptible de réaliser la focalisation du rayonnement lumineux véhiculé par la fibre (en raison du principe bien connu du retour inverse de la lumière), de sorte que l'on peut aussi envisager de l'utiliser (outre l'application générale susmentionnée relative au couplage source divergente-fibre) pour un certain nombre d'autres applications plus spécifiques telles que: couplage entre deux fibres, focalisation de l'énergie véhiculée par une fibre pour des applications diverses telles que l'affichage, le travail de matériaux variés, etc...

La forme de calotte sphérique requise pour la présente lentille peut revêtir des configurations très diverses: calotte sphérique d'épaisseur sensiblement inférieure à son rayon de courbure, lentille sensiblement hémisphérique, ou encore calotte d'épaisseur supérieure à son rayon de courbure (configurations équivalentes du point de vue optique si elles gardent toutes le même rayon de courbure, à condition néanmoins que leur épaisseur reste supérieure à l'épaisseur "optiquement utile"). La condition minimum requise pour la lentille en forme de calotte sphérique est toutefois que sa face plane accolée contre la face d'extrémité de la fibre recouvre au moins complètement la section du coeur de la fibre.

Les autres caractéristiques de la lentille (indice de réfraction, rayon de courbure, distance lentille-source) ne peuvent par contre

**0 005 683**

être fixées de manière arbitraire si l'on désire obtenir un rendement de couplage optimal, et elles doivent au contraire être déterminées de manière rigoureuse en fonction des paramètres de la fibre à laquelle la lentille est destinée à être associée. Le choix de l'indice de réfraction de la lentille n'est quant à lui pas absolument déterminant en ce qui concerne l'obtention d'un rendement de couplage optimal. De manière avantageuse cependant, la valeur de cet indice de réfraction sera fixée de manière approximative en fonction des paramètres de la fibre (et de la source), de façon à être sensiblement égale à celle du coeur de la fibre (indice variant entre 1,45 et 1,50 pour les fibres usuelles) dans le cas d'une fibre à faible cuverture numérique associée à une source peu divergente, et à être notablement supérieure à celle du coeur de la fibre (indice pouvant être choisi égal à environ 2) dans le cas d'une fibre à forte ouverture numérique associée à une source presque ponctuelle mais fortement divergente. L'indice de réfraction une fois fixé, les valeurs respectives du rayon de courbure de la lentille et de la distance source-lentille doivent par contre être déterminées de manière tout à fait rigoureuse en fonction des paramètres de la fibre si l'on veut obtenir un rendement de couplage optimal, ces valeurs étant, au demeurant, susceptibles de différer fortement d'une fibre à une autre. La façon de déterminer ces valeurs, qui est relativement complexe, sera esquissée ultérieurement.

On voit donc que l'obtention d'un rendement de couplage optimal exige la réalisation d'une lentile en forme de calotte sphérique dont les caractéristiques doivent être rigoureusement adaptées aux paramètres de la fibre optique sur laquelle cette lentille est destinée à être formée. D'où la nécessité de disposer d'un procédé de fabrication particulièrement souple, qui permette de former à volonté des microlentilles en forme de alotte sphérique présentant n'importe quelles caractéristiques prédéterminées. Le procédé de l'invention consiste à:

— disposer au centre de ladite face d'extrémité une microbille de forme sensiblement sphérique faite en un matériau thermoplastique transparent, et dont les dimensions sont choisies de manière qu'après fusion le diamètre de la lentille obtenue soit supéreur à la section du coeur de la fibre.

— chauffer ladite microbille à une température suffisante pour provoquer son étalement progressif sur ladite face d'extrémité, de manière qu'elle acquière alors en s'étalant la forme d'une calotte parfaitement sphérique qui tend à s'aplatir de plus en plus au fur et à mesure dudit chauffage,

— et, arrêter ledit chauffage au moment où ladite calotte atteint les dimensions désirées pour ladite microlentille.

On voit ainsi, dans le procédé qui vient d'être défini, que la fabrication d'une lentille en forme de calotte sphérique à l'extrémité d'une fibre donnée est obtenue essentiellement grâce au fait qu'on positionne tout d'abord contre cette extrémité de fibre une microbille initiale faite en un matériau thermoplastique transparent, et qu'on applique ensuite à cette microbille un traitement thermique approprié destiné à opérer sa transformation contrôlée en une calotte sphérique présentant les caractéristiques requises, les caractéristiques requises pour cette calotte sphérique étant précisément obtenables grâce au libre choix des paramètres de la microbille initiale.

Les paramètres de la microbile initiale sont en effet choisis de façon que cette microbille présente, d'une part, un indice de réfraction identique à celui désiré pour la microlentille à former, et d'autre part, un rayon initial fonction des dimensions que l'on désire obtenir pour la microlentille. Ainsi, dans le cas où l'on désire former une microlentille en forme de calotte sphérique présentant un rayon de courbure r et une épaisseur h, on sélectionnera une microbille présentant un rayon initial $r_0$ tel que (conservation du volume durant toute la transformation de la microbille):

$$r_0 = \sqrt[3]{\frac{1}{4} h^2(3r-h)}$$

Dans le cas particulier où l'on désire former une microlentille hémisphérique de rayon r, on sélectionnera donc une microbille présentant un rayon initial $r_0$ égal à 0,79 r.

Afin d'effectuer le traitement thermique destiné à opérer la transformation contrôlée de la microbille initiale en la calotte sphérique de caractéristiques désirées, on pourra par ailleurs envisager d'utiliser · tous les moyens de chauffage appropriés. Comme moyens de chauffage possibles, on pourra ainsi envisager d'utiliser des moyens tels que le microfour électrique, l'arc électrique, le microbrûleur, le faisceau laser etc...

De manière particulièrement avantageuse, on utilisera cependant le faisceau laser (tel que laser $CO_2$), en raison de la grand souplesse d'emploi de ce dernier (notamment en ce qui concerne le contrôle spatial, le contrôle temporel ou le contrôle de puissance).

Le dessin annexé illustre, schématiquement et à titre d'exemple, une forme d'exécution ainsi que des variantes de la fibre optique, objet de la présente invention.

La figure 1 est une vue schématique en coupe longitudinale, illustrant cette forme d'exécution.

La figure 2 est une vue en coupe longitudinale, illustrant une variante.

La figure 3 est une vue en coupe longitudinale à plus grande échelle, illustrant la marche de différents rayons lumineux à travers la structure de l'invention.

La figure 4 est un diagramme explicatif illustrant des résultats relatifs à la figure 3.

La figure 5 est une vue schématique d'une installation pour la mise en oeuvre du procédé, objet de la présente invention.

La figure 6 est une vue de dessus d'un détail, agrandi, de la figure 5.

Les figures 7a, 7b et 7c sont des vues en coupe d'un autre détail, agrandi, de la figure 5, ce détail étant montré à différents stades du procédé.

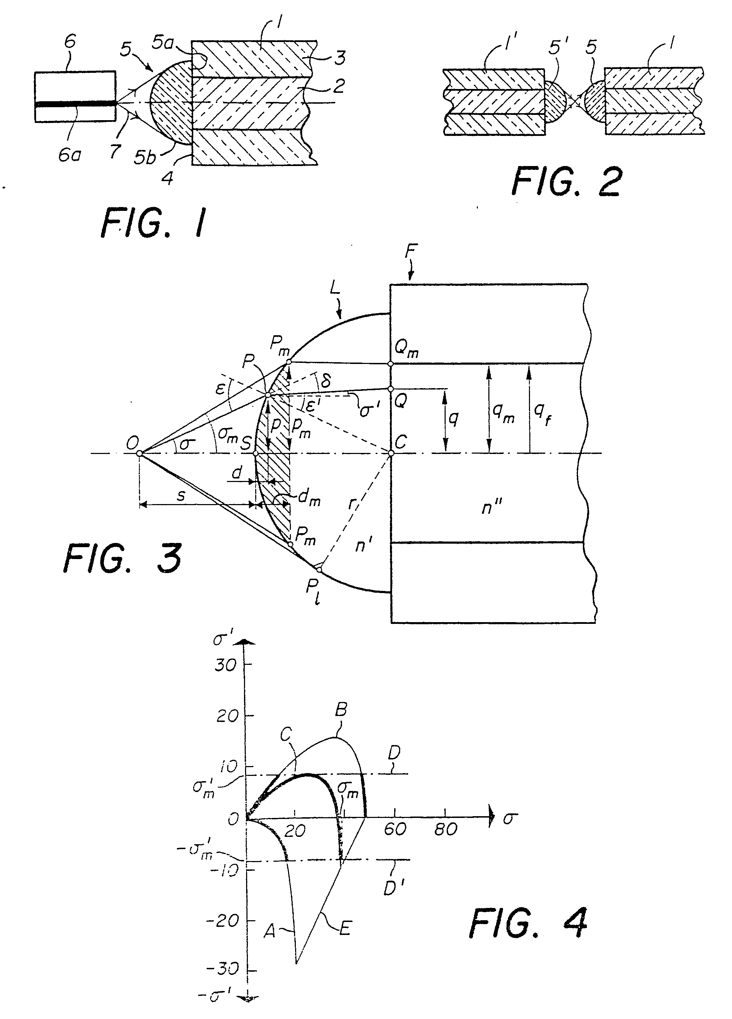

La structure représentée à la figure 1 comprend une fibre optique 1 se composant d'un coeur 2 fait en un premier matériau transparent, entouré d'une gaine 3 faite en un second matériau transparent d'indice de réfraction inférieur à celui du matériau du coeur. La fibre optique 1 présente une face d'extrémité plane 4 orthogonale à l'axe de la fibre. Contre la face d'extrémité 4 se trouve accolée une lentille plan-convexe 5 de forme sensiblement hémisphérique, centrée sur l'axe de la fibre 1. Cette lentille hémisphérique 5 est faite en un matériau thermoplastique transparent, choisi de façon à présenter un indice de réfraction au moins égal à celui du coeur de la fibre. Les dimensions de la lentille 5 sont par ailleurs choisies de façon que sa face plane 5a accolée contre la face d'extrémité 4 de la fibre recouvre au moins entièrement la section transversale du coeur 2 de la fibre. La fibre optique 1 est une fibre multimode, c'est-à-dire une fibre dont le coeur présente un diamètre d'au moins environ une dizaine de micromètres (typiquement de l'ordre de quelques dizaines de micromètres) de sorte que la face plane 5a de la lentille 5 doit présenter un diamètre qui soit lui aussi au moins égal à environ une dizaine de micromètres.

La lentille 5 ainsi accolée à l'extrémité de la fibre 1 peut être utilisée aussi bien comme organe d'entrée pour la fibre (la lentille pouvant alors notamment servir à assurer l'injection à l'intérieur du coeur de la fibre du faisceau lumineux émis par une source de lumière fortement divergente telle qu'une diode laser) que comme organe de sortie pour la fibre (la lentille pouvant alors notamment servir à assurer la focalisation du rayonnement lumineux véhiculé par la fibre).

La figure 1 illustre ainsi à titre d'exemple l'utilisation de la lentille 5 comme organe d'entrée destiné à assurer l'injection dans la fibre 1 du faisceau divergent 7 émis par la jonction 6a d'une diode laser 6 (on sait que les diodes laser émettent généralement un faisceau lumineux qui est à la fois fortement divergent dans le plan perpendiculaire à la jonction et faiblement divergent dans le plan de la jonction). La diode 6 est disposée à distance de la face hémisphérique 5b de la lentille de façon que sa jonction soit centrée sur l'axe commun à la lentille 5 et à la fibre 1. Les caractéristiques de la lentille 5 sont choisies par rapport à celles de la fibre 1 et celles de la diode laser 6 de façon à permettre la transformation du faisceau divergent 7 en un faisceau suffisamment collimaté pour que la majeure partie de ce dernier puisse être acceptée par la fibre 1.

La figure 2 illustre à titre d'exemple l'utilisation de la structure selon l'invention en vue d'assurer la connection entre deux fibres optiques 1 et 1', la lentille 5' accolée à l'extrémité de la fibre amont 1' servant à focaliser le faisceau véhiculé par cette fibre 1' et la lentille 5 accolée à l'extrémité de la fibre aval 1 servant à injecter dans cette fibre 1 le faisceau sortant de la fibre 1'.

On a dit plus haut que les caractéristiques exactes de la lentille destinée à être accolée à une fibre optique donnée devaient, pour donner lieu à un rendement de couplage optimal, être déterminées aussi bien en fonction des paramètres de cette fibre optique qu'en fonction de l'application envisagée, une telle détermination étant au demeurant relativement complexe à effectuer. On va ci-après exposer de manière succincte le principe d'une telle détermination, dans l'hypothèse simplifiée d'une source ponctuelle divergente dont le faisceau est destiné à être injecté dans une fibre optique à saut d'indice. Soit respectivement (figure 3) une fibre à saut d'indice $F$ d'ouverture numérique $A$ ayant un coeur de rayon $q_f$ et un indice de réfraction $n''$, une lentille hémisphérique $L$ centrée sur l'extrémité de la fibre $F$ et présentant un rayon de courbure $r$ et un indice de réfraction $n'$, et une source divergente ponctuelle $O$ disposée sur l'axe de la lentille $L$ à une distance $s$ du sommet $S$ de cette dernière. Soit par ailleurs $OP$ un rayon lumineux incident quelconque issu de $O$ et venant frapper la lentille au point $P$, ce rayon étant alors réfracté par la lentille selon un rayon $PQ$. Désignons alors respectivement par $\sigma$ et $\sigma'$ les inclinaisons respectives des rayons $OP$ et $PQ$ par rapport à l'axe optique du système, par $\varepsilon$ et $\varepsilon'$, les angles respectifs des rayons $OP$ et $PQ$ par rapport à la normale à la lentille au point $P$, par $\delta$ la déflexion totale du rayon à son passage au point $P$, par $p$ et $q$ les distances radiales respectives des points $P$ et $Q$, et par $d$ la distance axiale du point $P$ par rapport au sommet $S$ de la lentille ($d$ représentant ainsi l'épaisseur de la lentille au point $P$). Les théorèmes relatifs aux triangles, ainsi que la loi bien connue de la réfraction, permettent alors de tirer les relations suivantes:

(1) $$\frac{r}{\sin \sigma} = \frac{r+s}{\sin \varepsilon}$$

(2) $$\sin \varepsilon = n' \sin \varepsilon'$$

(3) $$\delta = \sigma - \sigma' = \varepsilon - \varepsilon'$$

En combinant les relations susmentionnées, on peut alors tirer la relation suivante:

$$(4) \quad \sigma' = \sigma + \text{arc sin } \left[\frac{1}{n'}(1 + \frac{s}{r}) \sin \sigma\right] - \text{arc sin } \left[(1 + \frac{s}{r}) \sin \sigma\right]$$

Cette dernière relation, qui exprime les variations de l'inclinaison $\sigma'$ du rayon réfracté $PQ$ en fonction de l'inclinaison $\sigma$ du rayon incident $OP$, montre que le comportement du rayon réfracté $PQ$ dépend uniquement des valeurs de l'indice $n'$ de la lentille et du rapport s/r (cette relation montrant au demeurant qu'une lentille n'est jamais parfaite, et qu'elle ne donne des rayons parfaitement collimatés, c'est-à-dire des rayons parfaitement parallèles à l'axe, que dans une gamme étroite de la valeur $\sigma$). Cette relation permet donc en particulier de déterminer, pour $n'$ et s/r fixés, la divergence ou la convergence moyenne de la lentille, et donc de fixer les valeurs de $n'$ et s/r qui permettent d'obtenir la meilleure collimation possible.

On peut ainsi montrer que la collimation optimale est susceptible d'être obtenue pour des valeurs du rapport s/r voisines de la valeur moyenne $(s/r)_m$ telle que:

$$(5) \quad (s/r)_m = \sqrt{(s/r)_p \times (s/r)_l}$$

$$\text{avec} \quad (s/r)_p = \frac{1}{n'-1}$$

$$\text{et} \quad (s/r)_l = \frac{1}{\cos [\text{arc sin } (1/n')] - 1}$$

où $(s/r)_p$ représente une première valeur limite pour laquelle les rayons incidents paraxiaux quittent la lentille selon une direction parallèle à l'axe (les rayons hors de la zone paraxiale donnent alors des rayons convergents qui, si leur convergence est trop prononcée, ne pourront pas être acceptés par la fibre F), et où $(s/r)_l$ représente une seconde valeur limite pour laquelle les rayons incidents limites (c'est-à-dire les rayons incidents pratiquement tangents à la lentille) quittent la lentille selon une direction parallèle à l'axe (les rayons paraxiaux donnant alors des faisceaux divergents qui, si leur divergence est trop prononcée, ne pourront pas non plus être acceptés par la fibre F).

En d'autres termes, la valeur moyenne $(s/r)_m$ constitue une valeur pour laquelle le système est dimensionné de façon que les rayons incidents moyens quittent la lentille selon une direction parallèle à l'axe, les rayons incidents limites ou paraxiaux donnant alors des faisceaux respectifs convergents ou divergents dont la convergence ou la divergence respective est suffisamment faible pour que ces derniers puissent être au moins dans leur plus grande partie, acceptés par le coeur de la fibre F. La formule approximative (5) sus-énoncée montre au demeurant que cette valeur moyenne $(s/r)_m$ dépend de la valeur de l'indice de réfraction $n'$ choisi pour la lentille L. Cette valeur $n'$ est, de manière avantageuse, ainsi que mentionné précédemment choisie en fonction des paramètres de la fibre F et de la source divergente O, de façon à être sensiblement égale à celle du coeur de la fibre (indice variant entre 1,45 et 1,50 pour les fibres usuelles) dans le cas d'une fibre à faible ouverture numérique associée à une source peu divergente, et à être notablement supérieure à celle du coeur de la fibre (indice pouvant être choisi égal à environ 2) dans le cas d'une fibre à forte ouverture numérique associée à une source fortement divergente.

Le tableau ci-après indique à titre d'exemple les différentes valeurs numériques susceptibles d'être prises par le rapport s/r dans les 3 cas susmentionnés pour un indice de réfraction $n'$ de la lentille choisi respectivement égal à 1,5 et à 2:

| | $(s/r)_p$ | $(s/r)_l$ | $(s/r)_m$ |
|---|---|---|---|
| $n'=1,5$ | 2,0 | 0,34 | 0,83 |
| $n'=2$ | 1,0 | 0,16 | 0,39 |

Le diagramme de la figure 4 (tracé à titre d'exemple pour une lentille d'incice de réfraction égal à 1,5) illustre de manière plus détaillée les variations de l'inclinaison $\sigma'$ du rayon réfracté $PQ$ en fonction de l'inclinaison $\sigma$ du rayon incident $QP$ pour les différentes valeurs s/r susmentionées (la partie positive de l'axe $\sigma'$ correspondant aux rayons réfractés divergents et la partie négative aux rayons réfractés convergents), les courbes A, B et C correspondant respectivement aux valeurs $(s/r)_p$, $(s/r)_l$ et $(s/r)_m$. Les droites horizontales D et D' situées de part et d'autre de l'axe $\sigma$ définissent par ailleurs le cône d'acceptation de la fibre optique F (droites D et D' interceptant respectivement l'axe $\sigma'$ selon les valeurs limites $+ \sigma_m'$ et $- \sigma_m'$ correspondant à l'ouverture numérique A de la fibre, laquelle est à titre d'exemple choisie égale à 0,2 au dessin). Ces droites D et D' servent ainsi à déterminer pour chacune des courbes A, B et C les seules portions de faisceaux qui sont acceptables par la fibre (seuls les rayon réfractés qui arrivent sur la fibre sous un angle $\sigma'$ compris entre les valeurs limites $+\sigma_m'$ et $-\sigma_m'$, c'est-à-dire les rayons correspondant aux parties de courbes représentées en trait épais au dessin, pouvant en effet être injectés dans la fibre). Sur le diagramme de la figure 4 se trouve enfin représentée la courbe E, qui constitue le lieu géométrique des angles limites $\sigma_1$ correspondant aux rayons incidents $OP_1$ arrivant tangentiellement à la lentille L (fig. 3), pour les différentes valeurs s/r susceptibles d'être prises par le système.

Le diagramme de la figure 4 montre ainsi clairement que le choix de valeurs s/r s'écartant trop de la valeur moyenne $(s/r)_m$ (correspondant à la courbe C) conduit à des faisceaux réfractés dont la majeure partie est soit trop convergente (cf. valeurs s/r voisines de celle correspondant à la courbe A) ou soit trop divergente (cf. valeurs s/r voisines de celle correspondant à la courbe B) pour être acceptée par la fibre F. On voit ainsi qu'il convient de choisir pour le système des valeurs s/r très voisines de la valeur moyenne $(s/r)_m$ si l'on désire obtenir un faisceau réfracté qui soit dans sa plus grande partie acceptable par la fibre F. Le diagramme de la figure 4 montre en effet très clairement que, pour s/r choisi sensiblement égal à $(s/r)_m$, la fibre F est en mesure d'accepter la plus grande partie du faisceau incident émis par la source O, à savoir toute la portion du faisceau incident d'angle d'ouverture $2\sigma_m$ (où $\sigma_m$ est donné par l'abscisse du point d'intersection M de la courbe C avec la droite D'). Cette portion du faisceau incident acceptable par la fibre F est matérialisée à la figure 3 par les rayons limites $OP_m$ d'inclinaison $\sigma_m$ (rayons limites $OP_m$ transformés par la lentille en rayons réfractés $P_mQ_m$ d'inclinaison $-\sigma_m'$).

La valeur optimale du rapport s/r étant ainsi fixée sensiblement égale à la valeur moyenne $(s/r)_m$, il reste maintenant à déterminer la valeur absolue du rayon de courbure optimal $r_m$ qu'il convient d'adopter pour la lentille, en fonction du rayon $q_f$ du coeur de la fibre F. La condition essentielle pour avoir une valeur $r_m$ optimale est que tous les rayons acceptables par la fibre remplissent complètement le coeur de cette fibre (de façon à utiliser au mieux la capacité de cette fibre), ce qui se traduit par la relation:

$$(6) \qquad q_m \simeq q_f$$

où $q_m$ désigne la distance radiale du point d'incidence $Q_m$ du rayon réfracté $P_mQ_m$ sur la fibre F.

En supposant en première approximation que:

$$(7) \qquad q_m \simeq p_m$$
et
$$(8) \qquad p_m = (s_m + d_m)\ \text{tg}\ \sigma_m \simeq s_m \text{tg} \sigma_m$$

($\sigma_m$ étant donné par le diagramme de la figure 4), on peut ainsi déterminer la valeur absolue de la distance optimale $s_m$, et donc en déduire la valeur du rayon de courbure optimal $r_m$ de la lentille.

On voit ainsi que l'obtention d'un rendement de couplage optimal pour une fibre F déterminée ne dépend en définitive que du choix adéquat de l'indice de réfraction $n'$ et du rayon de courbure $r$ de la lentille L. Il importe finalement peu que cette lentille L soit sensiblement hémisphérique ou qu'elle présente au contraire une forme de calotte sphérique d'épaisseur inférieure ou supérieure à son rayon de courbure, la condition minimale étant toutefois que cette calotte présente une épaisseur au moins égale à l'épaisseur utile $d_m$ (la valeur $d_m$ étant définie par la distance axiale du pont $p_m$ par rapport au sommet S de la lentille). On peut ainsi très bien envisager de remplacer la lentille hémisphérique L de la figure 3 par une lentille en forme de calotte sphérique présentant des dimensions identiques à la partie utile de la lentille L représentée en hachures au dessin, ou par toute autre lentille en forme de calotte sphérique présentant des dimensions intermédiaires (épaisseur $h$ quelconque supérieure à l'épaisseur utile $d_m$) entre celles de cette partie utile et celles de la lentille hémisphérique, toutes ces lentilles de dimensions différentes (mais à indice $n'$ et à rayon de courbure $r$ identiques) étant en effet pratiquement équivalentes d'un point de vue optique.

La détermination des caractéristiques exactes de la microlentille destinée à être accolée à une fibre donnée s'avère plus complexe à effectuer dans le cas où la fibre est une fibre à gradient d'indice au lieu d'être une fibre à saut d'indice, et/ou dans le cas où la source divergente est une source non-ponctuelle au lieu d'être une source ponctuelle. Les résultats d'une telle détermination restent cependant tout à fait équivalents à ceux susmentionnés d'un point de vue qualitatif, ainsi qu'on peut aisément le démontrer.

En résumé, on voit donc que les caractéristiques de la microlentille destinée à être accolée à une fibre donnée ne peuvent pas être choisies de manière quelconque si l'on désire obtenir un rendement de couplage optimal pour cette fibre. Les caractéristiques de cette microlentille doivent au contraire être déterminées de manière tout à fait rigoureuse et précise, de façon à permettre, d'une part, que le faisceau incident divergent puisse être transformé en un faisceau suffisamment collimaté pour que sa majeure partie soit acceptable par la fibre (première condition fixant la valeur optimale du rapport s/r), et d'autre part, que la totalité des rayons acceptables par la fibre puissent remplir complètement le coeur de cette fibre (seconde condition fixant la valeur optimale des grandeurs absolues $s$ et $r$). D'où tout l'intérêt du procédé de fabrication selon l'invention, qui permet précisément de former n'importe quelle microlentille de caractéristiques prédéterminées.

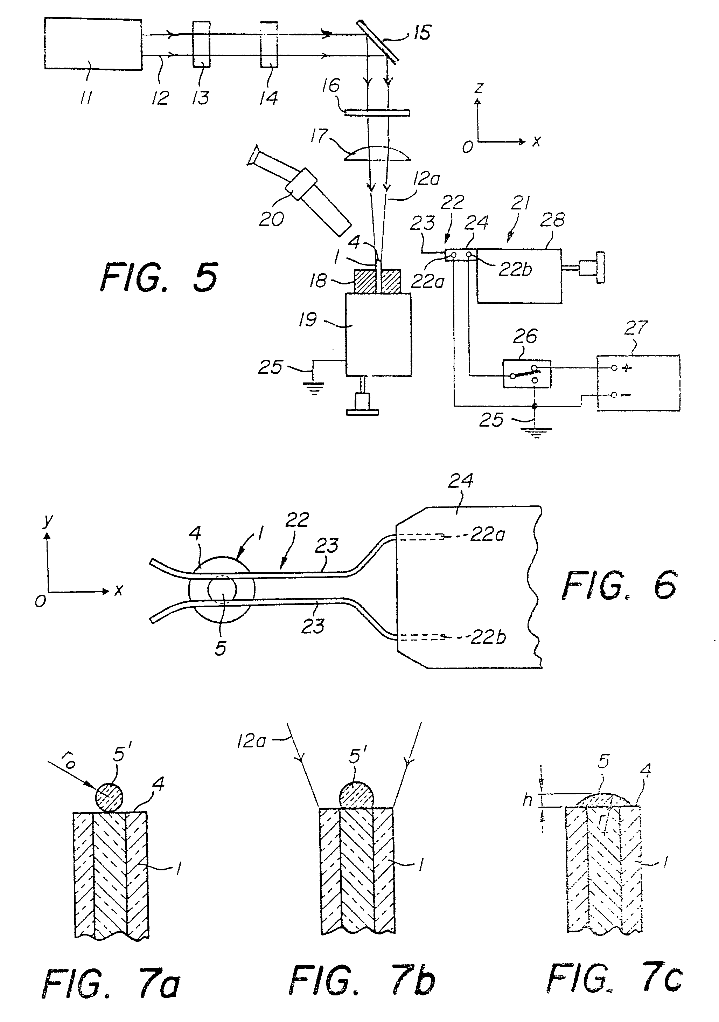

Les figures 5 à 7 illustrent à titre d'exemple une installation particulière pour la mise en oeuvre du procédé de fabrication selon la présente invention. Cette installation comprend (fig. 5) une source radiative 11, constituée par un laser $CO_2$ capable d'émettre un faisceau spatialement cohérent 12 d'une puissance d'environ 10 Watts (diamètre du faisceau 12 de l'ordre de 5 à 10 mm). Le faisceau laser 12, qui est émis sensiblement horizontalement par le laser 11, est destiné à être réfléchi verticalement vers le bas à l'aide d'un miroir 15 disposé à 45°, après avoir traversé successivement un atténuateur réglable 13 et un interrupteur réglable 14. L'atténuateur réglable 13 est conçu de façon à pouvoir atténuer le faisceau émanant du laser à une valeur comprise entre 0 et 50% de sa puissance initiale, cependant que l'interrupteur réglable 14 est conçu de façon à laisser passer le faisceau laser pendant un laps de temps compris entre environ 0,1 et 10 s (l'atténuateur 13 et/ou l'interrupteur 14 pouvant être constitués par des organes mécaniques et/ou optoélectroniques). La présence de l'atténuateur 13 et de l'interrupteur 14 permettent ainsi de générer n'importe quelle impulsion laser, dont la puissance et la durée sont réglables à volonté. Le miroir 15 est quant à lui constitué par une plaquette en alumine optiquement plane, qui absorbe la plus grande partie du faisceau laser incident et qui n'en réfléchit qu'environ 5%. La partie du faisceau laser 12 ainsi réfléchie vers le bas est ensuite destinée, après avoir traversé un diaphragme 16 à ouverture réglabe, à être focalisée au moyen d'une lentille plano-convexe 17 en germanium sur la face d'extrémité plane 4 d'une fibre optique 1, disposée au voisinage du foyer de cette lentille 17 (faisceau focalisé désigné par la référence 12a au dessin).

La fibre optique 1 est montée verticalement dans un rapport de fibre 18 solidaire d'un micromanipulateur 19. Ce micromanipulateur 19 a pour but de permettre le déplacement de la fibre 1 à la fois dans le sens vertical (direction $O_z$ au dessin) et dans le sens horizontal (directions $O_x$ et $O_y$ au dessin) de façon à assurer le positionnement exact de la face d'extrémité 4 de cette fibre par rapport au foyer du faisceau laser 12a (micromanipulateur 19 présentant une résolution spatiale de l'ordre de quelques microns dans les trois coordonées). L'observation visuelle de la fibre 1 montée dans son support 18 peut être effectuée à l'aide d'un stéréomicroscope binoculaire 20, disposé selon une inclinaison de 30° par rapport à la verticale afin de ne pas perturber le trajet du faisceau laser (on utilisera de manière avantageuse un microscope 20 permettant un agrandissement compris entre 25 et 160, ce microscope étant par ailleurs muni d'un micromètre occulaire d'une résolution d'environ 1 micron). Le micromanipulateur 19 et le support de fibre 18 sont par ailleurs reliés à la masse 25, de façon à éviter que la fibre 1 puisse se charger électrostatiquement.

L'installation sus-décrite comprend en outre un dispositif 21, chargé d'assurer la mise en place d'une microbille 5' faite en un matériau thermoplastique transparent (figures 6 et 7) au centre de la face d'extrémité 4 de la fibre 1. Ce dispositif 21 de mise en place de microbilles comprend une prise électrostatique 22, constituée (fig. 6) par deux fils de platine 23 distants 1'un de l'autre, qui fait saillie latéralement d'une plaque isolante 24 dans laquelle ils s'y sont fixés par une de leurs extrémités (ces extrémités fixées dans la plaque 24 étant ainsi destinées à constituer des bornes 22a et 22b pour la prise 22). Ces deux fils 23 sont conformés de façon à être parallèles dans leur partie centrale et divergents à leurs deux extrémités, l'écartement des fils dans leur partie centrale étant par ailleurs choisi sensiblement inférieur au diamètre de la microbille 5' à positionner. L'une des bornes 22a de la prise 22 est directement reliée à la masse 25, cependant que l'autre borne 22b de la prise est reliée au point milieu d'un inverseur à deux positions 26, dont l'une des bornes est également reliée à la masse 25 et dont l'autre borne est reliée au pôle positif d'une source de tension continue 27 de l'ordre de 150 à 300 Volts (le pôle négatif de la source 27 étant également relié à la masse 25). L'inverseur 26 a ainsi pour but de permettre soit l'établissement d'une différence de potentiel continue de l'ordre de 150 à 300 V entre les deux fils 23, soit au contraire l'amenée de ces deux fils 23 à la masse. La plaque isolante 24 de la prise 22 est par ailleurs montée horizontalement sur un micromanipulateur 28, chargé d'assurer le déplacement de la prise 22 dans les trois directions de l'espace (micromanipulateur 28 présentant une résolution spatiale de l'ordre du micron dans les trois coordonées), afin de permettre notamment l'amenée de la partie centrale de la prise 22 à l'aplomb de la face d'extrémité 4 de la fibre 1).

Le fonctionnement de l'installation qui vient d'être décrite est le suivant:

On prépare tout d'abord une fibre optique 1 présentant une face d'extrémité 4 parfaitement plane orthogonale à l'axe de la fibre. Pour effectuer cette préparation, on opère de la manière suivante sur une fibre débarrassée de son manchon plastique protecteur: on chauffe tout d'abord cette fibre par microflamme de façon à la fragiliser, et on lui applique une tension-flexion de façon à provoquer sa rupture, cette rupture permettant d'obtenir une face d'extrémité présentant une planéité grossière. On procède unsuite au polissage mécanique de cette face d'extrémité grossièrement plane à l'aide d'une pâte abrasive contenant des grains de diamant d'environ 3 microns, de façon à obtenir une face d'extrémité 4 de qualité désirée (durée de polissage de l'ordre d'une heure). Après ce polissage mécanique, on plonge alors l'extrémité de la fibre ainsi polie pendant environ 30 secondes dans un récipient contenant de l'acide sulfurique à 130°C, afin d'enlever la couche protectrice en matière plastique de faible épaisseur qui entoure normalement la fibre, et afin aussi de dégraisser complètement l'extrémité polie de cette fibre. La fibre ainsi traitée à l'acide est ensuite placée dans une cuve de nettoyage ultrasonique remplie d'alcool isopropylique, et finalement rincée à l'eau distillée.

La fibre 1 une fois préparée selon la manière susindiquée, on la monte alors dans le support de fibre 18 solidaire du micromanipulateur 19, et on actionne ce micromanipulateur 19 de façon à amener la face d'extrémité 4 de la fibre 1 sensiblement dans la zone focale du faisceau laser 12a. Cette zone focale peut avoir été, préalablement à cette amenée de la fibre au foyer, repéré à l'aide de techniques diverses: visualisation de la position et de la forme du foyer laser par observation du microcratère formé dans un verre couvre-objet de microscope (à l'aide d'un faisceau laser atténué), visualisation à l'aide d'un papier thermosensible, visualisation par observation de la figure de brûlure obtenue dans une simple feuille de papier, etc. . . La face d'extrémité 4 de la fibre 1 une fois disposée dans la zone focale du faisceau laser, on procède alors, de manière particulièrement avantageuse, au "glaçage" par fusion au laser de cette face d'extrémité 4, ceci préalablement à la fabrication de la microlentille. Ce glaçage par fusion au laser a pour but de permettre l'obtention d'une face d'extrémité 4 optiquement polie, à savoir une face présentant une surface parfaitement lisse et non diffusante. Ce glaçage est opéré en envoyant sur la face 4 une impulsion laser de puissance et durée adéquates et en déplaçant cette face 4 dans le plan xOy au moyen du micromanipulateur 19 de façon à glacer toute la face de manière homogène, la fusion superficielle de cette face 4 étant contrôlée par actionnement du diaphragme réglable 16. Lorsque la surface est devenue parfaitement lisse (observation à l'aide du microscope 20), on arrête le glaçage en refermant le diaphragme 16.

La face d'extrémité 4 une fois glacée, on procède alors à la mise en place au centre de cette face 4 d'une microbille 5' sensiblement sphérique faite en un matériau thermoplastique transparent (cette microbille 5' étant ensuite destinée à être transformée par fusion laser contrôlée en une microlentille 5 de caractéristiques prédéterminées). Avant d'effectuer la mise en place proprement dite, on procède cependant tout d'abord à la sélection et au nettoyage adéquats de la microbille 5'. Cette microbille 5' est en effet préalablement sélectionnée de façon à présenter, comme indiqué précédemment, d'une part, un indice de réfraction identique à celui désiré pour la microlentille 5, et d'autre part, un rayon initial $r_0$ fonction des dimensions finales r et h désirées pour la microlentille (selon la relation indiqué précédemment). La microbille 5' convenablement sélectionnée, on procède ensuite à son nettoyage. Ce nettoyage peut, à titre d'exemple, consister à plonger successivement la microbille 5' dans du trichloréthylène filtré, dans du méthanol pro analysi et dans de l'eau déionisée, et à sécher la microbille ainsi traitée sur une plaque chauffante portée à 250°C. La prise électrostatique 22 est également nettoyée de la même manière que la microbille 5'.

Le nettoyage effectué, on procède alors à la mise en place proprement dite de la microbille 5'. Pour effectuer cette mise en place, on actionne tout d'abord le micromanipulateur 28 (observation au microscope 20) de façon à amener la partie centrale des fils 23 de la prise 22 à l'aplomb de la microbille 5' (prise placée à environ 5 â 10 microns au-dessus de la microbille), et on commute alors l'inverseur 26 de façon à appliquer une tension de 150 à 300 V entre les deux fils 23 (inverseur 26 initialement placé dans sa position pour laquelle les deux fils 23 sont reliés à la masse). L'application de cette tension a pour effet de générer entre les fils 23 un champ électrique inhomogène suffisamment fort pour attirer la microbille 5' contre ces fils et l'y maintenir en suspension (la force attractive résultant de la constante diélectrique et de la densité d'énergie électrostatique du matériau constitutif de la microbille, qui sont plus élevées que celle de l'air).

La microbille 5' une fois maintenue en suspension contre la prise 22, on actionne alors le micromanipulateur 28 (observation au microscope 20) de façon à amener la microbille 5' à l'aplomb du centre de la face d'extrémité 4 de la fibre 1 (microbille située à environ 5 à 10 microns de la face 4), et on commute alors l'inverseur 26 dans son autre position de façon à porter les deux fils 23 à la masse, ce qui a pour effet de relâcher la microbille au centre de la face d'extrémité 4 (fig. 7a).

La microbille 5' une fois correctement positionnée au centre de la face 4, et l'ensemble ainsi formé se trouvant toujours sensiblement dans la zone focale du faisceau laser 12a, on peut alors procéder à l'usinage de cette microbille 5' à l'aide du faisceau laser 12a, de façon à la transformer en une microlentille en forme de calotte sphérique 5 présentant les dimensions voulues. Pour effectuer cet usinage, on applique à la microbille 5' une impulsion unique ou une suite d' impulsions laser de puissance et de durée adéquates, qui ont pour effet de provoquer la déformation de la microbille à chaque impulsion (déformation résultant du fait que chacune des impulsions possède une énergie suffisante pout porter la microbille à une température au moins égale à sa température de travail). La microbille 5' s'étale alors progressivement sur la face d'extrémité 4 de la fibre 1 en s'aplatissant contre cette face (fig. 7b) au fure et à mesure que les impulsions se succèdent, la face externe de la microbille en déformation gardant par ailleurs une forme toujours parfaitement sphérique et optiquement polie en raison des tensions de surface qui s'exercent sur cette face externe. La transformation de cette microbille 5' peut être pilotée à l'aide du diaphragme 16 de façon à s'opérer à une vitesse suffisamment lente pour qu'on puisse contrôler visuellement à chaque instant (à l'aide du microscope 20) l'état d'avancement de cette transformation. Ce processus d'usinage thermique par impulsions-laser est arrêté lorsque la microbille 5' s'est suffisamment étalée et aplatie sur la face 4 pour atteindre la forme de calotte sphérique présentant les dimensions r et h voulues. L'ensemble se refroidit alors pour être fixé dans sa forme définitive, la calotte sphérique ainsi fixée dans sa forme définitive constituant la microlentille 5 désirée (fig. 7c).

On voit ainsi clairement que le procédé décrit est particulièrement souple et bien adapté à la fabrication de microlentilles intégrées à l'extrémité de fibres optiques, étant donné qu'il permet, grâce au libre choix de l'indice de réfraction et des dimensions de la microbille initiale, de réaliser des microlentilles dont les caractéristiques optiques peuvent être variées dans une gamme étendue. D'où la possibilité d'assurer dans tous les cas l'optimalisation des performances de la microlentille, ceci quelque soit le type de la fibre optique sur laquelle cette microlentille est destinés à être formée.

Dans le procédé décrit, l'opération de glaçage appliquée préalablement au positionnement de la microbille présente l'avantage majeur, ainsi que cela a été vérifié expérimentalement, de minimiser l'effet de décentrage de la microlentille susceptible de survenir au cours de l'usinage de la microbille par impulsions laser. Cette opération de glaçage présente également l'avantage additionnel d'améliorer la fixation de la microlentille contre la face d'extrémité de la fibre optique, ainsi que d'améliorer les performances optiques de l'ensemble (en éliminant tous les centres de diffusion de lumière et toutes les bulles d'air susceptibles d'être présentes à l'interface fibre-microlentille d'une fibre non glacée).

Exemple On utilise une fibre optique à gradient parabolique d'indice connue dans le commerce sous le nom de Schott type N5, ayant un coeur en silice dopée présentant un indice de réfraction de l'ordre 1,45 (point de travail de l'ordre de 1500 à 2000°C) et un diamètre de l'ordre de 50 microns, ledit coeur étant entouré d'une gaine en silice présentant un diamètre externe de l'ordre de 136 microns. Cette fibre présente une ouverture numérique égale à 0,261, d'où un angle d'acceptation maximal dans l'air (au centre du coeur) égal à 15,1° (l'angle maximal d'acceptation dans un milieu d'indice 1,51 correspond à celui de la microlentille à former à l'extrémité de cette fibre étant donc de 10°).

On applique à cette fibre les opérations de préparation sus-décrites (polissage mécanique suivi de glaçage), de façon à réaliser une face d'extrémité orthogonale à l'axe de la fibre qui soit optiquement polie.

La fibre ainsi préparée, on sélectionne alors une microbille en verre (point de travail de l'ordre de 1000°C) ayant un indice de réfraction de l'ordre de 1,51 et un diamètre de l'ordre de 46 microns, et on procède à son nettoyage, ainsi qu'a son positionnement au centre de la face d'extrémité optiquement polie de la fibre, ceci de la façon précédemment décrite.

La microbille une fois correctement positionnée, on procède alors à son usinage au moyen du faisceau laser, en lui appliquant une suite d'impulsions laser de puissance et de durée adéquates et on observe sa déformation progressive à l'aide du microscope binoculaire. L'usinage au faisceau laser est arrêté lorsque la microbille revêt une forme sensiblement hémisphérique (l'énergie laser totale appliquée étant de l'ordre de 10 m Joules). Après refroidissement, on obtient ainsi une microlentille de forme sensiblement hémisphérique parfaitement accolée contre la face d'extrémité de la fibre, cette microlentille présentant un rayon de courbure d'environ 28,5 microns.

La microlentille ainsi formée sur la face d'extrémité de la fibre, on place alors à distance de la microlentille (sur l'axe du système) une diode laser présentant une surface émettrice rectangulaire d'environ 0,5 microns de largeur et 13 microns de longueur, qui émet un faisceau présentant une divergence d'environ 25°×3° (angles correspondant à l'intensité l/e), et on mesure le coefficient de couplage de l'ensemble (rapport de l'intensité injectée dans la fibre sur l'intensité totale émise par la diode laser). La surface émettrice étant disposée à une distance optimale du sommet de la microlentille, on mesure un coefficient de couplage de 60%.

## Revendications

1. Procédé pour former sur au moins l'une des faces d'extrémités d'une fibre optique donnée une microlentille plan-convexe en forme de calotte sphérique accolée par sa face plane contre ladite face d'extrémité, celle-ci étant plane orthogonale à l'axe de la fibre, caractérisé par le fait qu'on dispose au centre de ladite face d'extrémité une microbille de forme sensiblement sphérique faite en un matériau thermoplastique transparent, et dont les dimensions sont choisies de manière qu'aprés fusion le diamètre de la lentille obtenue soit supérieur à la section du coeur de la fibre, chauffe ladite microbille à une température suffisante pour provoquer son étalement progressif sur ladite face d'extrémité de manière qu'elle acquière alors en s'étalant la forme d'une calotte parfaitement sphérique qui tend à s'aplatir de plus en plus au fur et à mesure dudit chauffage, et arrête ledit chauffage au moment où ladite calotte atteint les dimensions désirées pour ladite microlentille.

2. Procédé selon la revendication 1, caractérisé par le fait qu'on utilise une fibre initiale dont la face d'extrémité présente une surface optiquement lisse et polie.

## Patentansprüche

1. Verfahren, um auf mindestens einer der Endflächen einer gegebenen optischen Faser eine plankonvexe Mikrolinse in Form einer sphärischen Kalotte herzustellen, welche mit ihrer planen Seite mit der erwähnten Endfläche verbunden ist, wobei letztere eine Ebene senkrecht zur Fiberachse bildet, dadurch gekennzeichnet, dass man im Zentrum der erwähnten Endfläche eine Mikrokugel von im wesentlichen sphärischer Form aufbringt, welche aus einem durchsichtigen thermoplastischen Material besteht und deren Dimensionen derart gewählt sind, dass, nach Schmelzen, der Durchmesser der erhaltenen Linse grösser wird als der Durchmesser des Fiberkernes, dass man die erwähnte Mikrokugel auf eine Temperatur aufheizt, welche genügt um ihr allmähliches Ausbreiten auf der erwähnten Endfläche zu bewirken, derart dass diese, indem sie sich ausbreitet, die Form einer vollkommen sphärischen Kalotte annimmt, welche die Tendenz hat während des erwähnten Aufheizens, sich mehr und mehr abzuflachen, und dass man das erwähnte Aufheizen zu einem Zeitpunkt abstoppt, wenn die erwähnte Kalotte die für die erwähnte Mikrolinse gewünschte Dimension erreicht hat.

2. Verfahren gemäss Patentanspruch 1, dadurch gekennzeichnet, dass man anfangs eine optische Faser verwendet, deren Endfläche eine optisch glatte und polierte Oberfläche besitzt.

## Claims

1. Process for forming on at least one of the end faces of a given optical fiber a plane-convex micro-lens in form of a portion of a sphere applied by its planar face against said end face, the latter being plane-normal relative to the fiber axis, characterized by the fact that one disposes on the centre of said end face a micro-bead of substantially spherical shape made of a transparent thermoplastic material, and the dimensions of which are chosen such that after melting the lens diameter exceeds the cross-section of the fiber core, heats said micro-bead to a temperature sufficient for provoking its progressive spreading over said end face so that it becomes under spreading a perfectly spherically shaped portion of a sphere which tends to flatten more and more as heating progresses, and discontinues said heating when said portion of a sphere attains the desired dimension for said micro-lens.

2. Process according to claim 1, characterized by the fact that one uses an initial fiber the end face of which has an optically polished and smooth surface.

FIG. 1

FIG. 2

FIG. 3

FIG. 4

FIG. 5

FIG. 6

FIG. 7a

FIG. 7b

FIG. 7c